Europäisches Patentamt

European Patent Office

Office européen des brevets

(11) Publication number: **0 484 802 A2**

# EUROPEAN PATENT APPLICATION

(21) Application number: **91118422.4**

(22) Date of filing: **29.10.91**

(51) Int. Cl.5: **G02B 27/14**

(30) Priority: **06.11.90 DE 4035144**

(43) Date of publication of application:
**13.05.92 Bulletin 92/20**

(84) Designated Contracting States:
**AT BE CH DE DK ES FR GB GR IT LI LU NL SE**

(71) Applicant: **BIOPHOTONICS, INC.**
**10641 First Street East**
**Treasure Island, Florida 33706(US)**

(72) Inventor: **Lazarev, Viktor Vladimirovich**
**ul. Panferova, 11, kv. 81**
**Moskau(SU)**
Inventor: **Rakhimov, Alexandr Tursunovich**
**Rostovskaia nab., 1, kv. 95**
**Moskau(SU)**
Inventor: **Rubin, Leonid Borisovich**
**Lomonosovskii pr., 44, kv. 499**
**Moskau(SU)**

(74) Representative: **Nix, Frank Arnold, Dr. et al**
**Kröckelbergstrasse 15**
**W-6200 Wiesbaden(DE)**

(54) **Optical beam-splitting system for the generation of a plurality of real images.**

(57) Described is an optical beam-splitting system for the generation of a plurality of real images (8) of an object (1) in a plane (7), comprising an objective lens (2) and optical elements (4) being arranged behind the objective lens (2) and deflecting the path of rays at planar reflective surfaces (5). Each optical element intercepts a partial luminous flux within the region (VEX) where the beams emanating from the extremities of the object (1) and passing through the objective lens (2) overlap each other, and each optical element deflects its partial luminous flux by means of at least two reflecting planes (5) sideways and back into the original direction or a direction which is at least near the original direction, with the change ($\Delta f$) of the distance (L; l) of the image plane (9; 7) caused by all optical elements being the same.

This arrangement provides for a simple construction and allows to generate a plurality of geometrically identical real images of an object in the same image plane.

Fig 1

The present invention refers to an optical beam-splitting system for the generation of a plurality of real images of an object in a plane with an objective lens and optical elements arranged behind this objective lens and deflecting the path of the beam at planar reflective surfaces. Systems of this kind can be used in television cameras, in aerial photography and in space photography, in microscopy, in the general photography, in photo lithography in preparing printing plates, in the spectral analysis of images, in projecting devices and in similar cases, namely in all cases where the necessity arises to create a plurality of absolutely identical images of the object simultaneously.

In some of these applications the generated images should differ from each other with respect to their spectral range or the polarization of the luminous fluxes by which they are generated. Such identical images, which however are obtained in different spectral ranges or from portions with different directions of their polarization allow, in certain applications, to study the distribution of certain substances in the object examined, the accentuation of characteristic details or regions and similar techniques. When examining moving objects all images-apart from the differences mentioned - have to be absolutely identical, especially they have to be obtained simultaneously and at the same angle of vision.

Known in the art are beam-splitting systems dividing and distributing a luminous flux into optical paths and generating a plurality of real images with multiple channel television cameras, e.g. for aerial or space photographs of the surface of the earth. In a camera of this kind, described in the information "Multiple channel camera for aerocosmic photographs MB-490 B, Japan" in the publication "Express-information", edition 5, series aerophototopography, Moscow, July 01, 1980, page 3 and 4, the beam-splitting device for obtaining a plurality of images is a system consisting of a plurality of objective lenses, the axes of which are spaced one beside the other. In this embodiment the number of objective lenses has to be equal to the number of images to be generated. Because of the high demands for the quality of the images it is impossible to use a simple lenticular screen for the generation of the images. The different spectral ranges which are to generate the images are secured by corresponding filters with each objective lens.

This known aerial or space camera is very bulky, very heavy and is extremely complicated and, therefore, expensive. Furthermore, the images obtained of the object are not identical because of the distance necessary between the objective lenses, which gains in significance when the distance between the object and the objective lens is small.

In the book "Optics of television devices" by V.S. Babenko, Moscow, 1982, pages 156 - 158, a colour television camera is described, having an objective lens and a beam-splitting device behind the objective lens and in front of three receiving devices - tubes or CCD-arrays -, picking up the three primary colours. This beam-splitting device consists of semi-transparent mirrors or prisms arranged in the path of the beam with each of these elements letting pass the luminous flux with its entire cross section and with a portion of its energy and deflecting the other portion of its energy.

One shortcoming of this embodiment of a beam-splitting system is that only a limited number of images can be obtained, normally the usual three images. The reason for this is that the division of the luminous flux occurs in sequence, i.e. that the optical elements intercepting the beam partially are arranged one behind the other along the axis of the objective lens. If a large number of images is required, the result is a beam-splitting system so long that either an objective lens with a large focal length and, consequently, a small vision field has to be used, or additional objective lenses for the transmission of the images are required.

Furthermore, the images generated by these beam-splitting systems lie in different image planes. Because the receiving surfaces of the optical receiving or registration devices - such as films, photographic paper, image surfaces of receiving tubes, receiving surfaces of CCD-arrays - are plane surfaces, the generated images cannot be received by only one receiving device of this kind, but for registration of each image a separate receiving device is necessary.

If the object of which an image is to be formed is only weakly lit or if the lighting lies in a spectral range to which the receiving device does not respond, use has to be made of electron-optical image converters, the number of which has to be equal to the number of the images. The necessity of using a plurality of receiving devices and a plurality of electron-optical image converters renders an optical instrument incorporating such a beam-splitting device costly, bulky and heavy.

The nearest state of art with respect to the present invention is considered to be the beam-splitting device described in the German Patent DE 2 948 687, which is used in a viewing device with two oculars, the distance between which is variable, in which a semi-transparent beam divider is arranged in the path of the beam and the luminous flux passing through reaches one of the oculars, whereas the intercepted beam passes a collimator, a telescope and a pentagon prism and reaches the other ocular. With this embodiment the two images generated are identical and do lie in the same image plane, however, for the generation of the second image an additional optical system consisting of the collimator and the telescope is required, which also renders this system complicated and expensive.

The object of the present invention is to create an optical beam-splitting system which is simple of construction and allows to generate a plurality of geometrically identical real images of an object in the same image plane. Thus, it should become economically possible to form a plurality of identical images, especially of nearby objects.

The solution of this problem is indicated in claim 1. The essence of the invention is to be found in the fact that behind the objective lens there is a region in which the luminous flux contains complete information on the object. This region is, in an axial section, of approximately triangular form and is bordered by the rays emanating from an extremity of the object and passing through the objective lens on the same side as marginal ray.

Generally, this region can be described as the region in which all beams overlap each other which emanate from every extremity point of the object, pass through the objective lens and unite behind the objective lens in the image point of the object extremity point under consideration.

Thus, in this region also a partial cross section of the luminous flux contains full information on the object and if one arranges in this region a plurality of optical elements which intercept and set off laterally a partial cross section of the luminous flux and if the changes of the distance between the objective lens and the image plane caused by these optical elements are equal, a corresponding number of identical images in a common image plane side by side is obtained.

It is to be understood that the optical elements have to be arranged so that they do not shade each other. Equally, each optical element should transmit the intercepted partial luminous flux completely. If this does not happen and if the exit window of the optical element partially blocks out the luminous flux intercepted by its entry window the result is an uneven illumination, diminishing in one direction of the generated image. The illumination in each point of the generated image depends upon the aperture angle of the beam converging in this point.

The transverse deflection and the deflection back to the original direction by the optical elements results in a parallel set off of the path of the rays in lateral direction, which generally is accompanied by a change in the location of the image plane. The new position of the image plane can be nearer of, depending upon the properties of the optical elements involved, farther from the objective lens as the image plane of the objective lens without interference of optical elements. If all optical elements bring about the same change in the distance of the image plane a new image plane with a plurality of identical images side by side is obtained.

The magnitude and the direction of the displacement of each image depends upon the form and the specific arrangement of the corresponding optical element. If all optical elements used are identical they will be so arranged that their first reflective surfaces are not parallel to each other but have the same inclination angle with the axis of the objective lens.

The distribution of the illumination in the various images is different from each other and different from the distribution of the illumination of the object. The reason for this is the vignetting effect on the rays by the entry- and exit windows of the optical elements. The degree of distortion of the illumination of the image becomes less with an approximation towards the objective lens in axial direction. For this reason it is preferable that the optical elements are arranged immediately behind the objective lens and that the edges of their entry windows contact the axis of the objective lens. Thus, in the case of more than two optical elements, the entry windows of the same are in form of sectors, the point of which lie on the axis of the objective lens.

In a preferable embodiment of the invention the reflective surfaces of the optical elements are plane mirrors, i.e. plane portions of the surface of solid bodies. The application of a totally reflecting coating on these surfaces enhances their reflection coefficient and thus the illumination of the image generated by this element. The application of a spectrally selective reflective coating, which with the different optical elements is effective in different spectral ranges, allows the generation of images in these different spectral ranges and the processing of the images using these differences.

If the requirements with respect to the mechanical rigidity of the optical elements are high, it is advantageous if the optical elements are prisms, transparent in the spectral range used, with the prism surfaces being the reflective surfaces. With large angles of incidence of the rays on the reflective surfaces it is preferable to make use of the phenomenon of the inner total reflection.

The optical elements may be known reflecting prisms alone as well as in combination with mirrors.

Preferably, the reflective surfaces of optical prism elements are coated with reflective surfaces, especially if the angle of incidence of the rays is small.

In the following, the invention will be further explained by the description of examples of execution with reference to the attached drawings. These drawings show:

Fig. 1 schematically a beam-splitting device with different optical elements;

Fig. 2 the location of the images in the image plane generated by the system according to fig. 1;

Fig. 3 an axial section of the beams emanating from the extremities of the object and passing through the objective lens;

Fig. 4. an example for the critical position of an optical element;

Fig. 5 the axial section of a beam-splitting device with optical elements in the form of sectors, arranged immediately behind the objective lens;

Fig. 6 the front view of the optical elements according to fig. 5, seen from the side of the objective lens;

Fig. 7 the images created by the system according to fig. 5, 6;

Fig. 8 schematically an optical element consisting of mirrors;

Fig. 9 schematically an optical element in the form of a prism;

Fig. 10 the axial section of a beam-splitting device with optical elements in the form of rhombic prisms;

Fig. 11 the front view of the optical prism elements of the system according to fig. 10;

Fig. 12 the images generated by the system according to fig. 10, 11;

Fig. 13 schematically a beam-splitting device with optical elements setting off the luminous fluxes towards the axis of the objective lens;

Fig. 14 schematically a beam-splitting device generating images with adjustable distance from each other;

Fig. 15 an optical element in a system with the indication of the parameters necessary for the calculations.

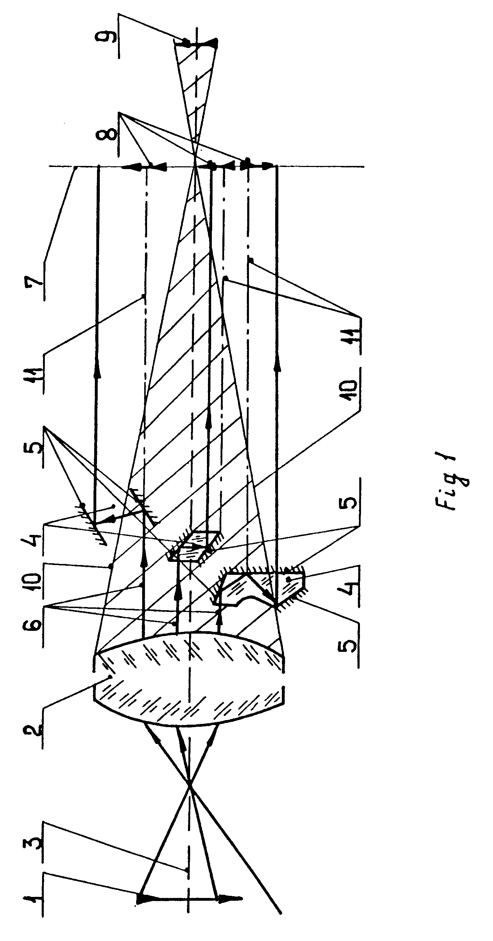

Fig. 1 shows the principal scheme of a beam-splitting device generating a plurality of images of an object 1. The system consists of the objective lens 2 with the axis 3 and three optical elements 4 with reflective surfaces 5 arranged behind the objective lens. The reflective surfaces create images 8 lying in an image plane 7. The objective lens 2 without optical elements creates an image 9 on the axis 3 according to the position of the object 1 and in a greater distance of the image plane than the images 8 created with the help of the optical elements 4.

The effect of the optical elements is illustrated by the rays 6 parallel to the axis 3 behind the objective lens. Each optical element brings about a parallel set-off of all incident rays parallel to their original direction and the lateral displacement of these parallel rays corresponds to the lateral displacement of the image 8 to which the ray under consideration pertains. The optical axes of the partial luminous fluxes displaced by the optical elements is denoted with the numeral 11.

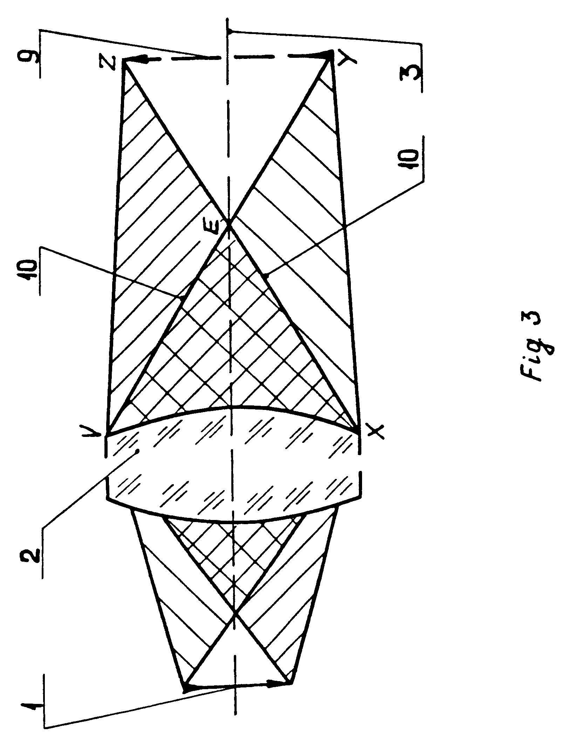

The entry windows of the optical elements 4 are located in a region of approximately triangular form which, in the axial section according to fig. 1, is hatched and defined by borders 10 behind the objective lens, which may be called "information zone" and which is to be explained further with reference to fig. 3.

If the number of reflections occuring in the optical element is two or another even number, the spatial orientation of the image 8 will not be changed with respect to the orientation of the image 9 created by only the objective lens without optical elements. If the number of reflections in the optical element is three or an uneven number, a rotation is brought about, which eliminates the rotation caused by the objective lens and an upright image is obtained.

All optical elements are of such a construction that the axial displacements of the image planes of their images 8 relative of the image plane of the image 9 generated by only the objective lens without optical elements equal each other. Thus, the images 8 lie in a common new image plane 7.

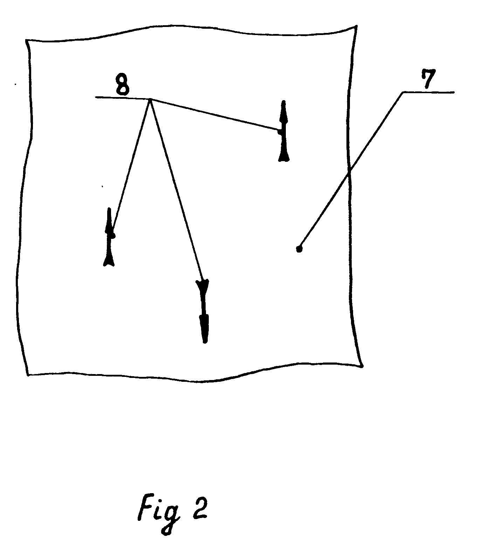

Fig. 2 shows how the lateral displacements of the images 8 in the image plane 7 are obtained. The two upper optical elements 4 with two reflective surfaces 5 each leave the rotation of the image with respect to the position of the object caused by the objective lens unchanged. The lower optical element with three reflective surfaces 5 brings about a rotation so that its image 8 is obtained with direct orientation.

Fig. 3 illustrates the conception "information zone", which denotes the region behind the objective lens 2 in which full information on the object 1 is present. This zone is represented by the triangle VXE.

The upper borderline 10 of this zone is the ray of the beam emanating from the upper extremity of the object 1 (tail of the arrow) which passes through the objective lens 2 as marginal ray (rim ray, peripheral ray) on the same side of the axis of the objective lens. The beam emanating from the extremity arrow's tail and passing through the objective lens is hatched with lines ascending to the right side and is, behind the objective lens, bordered by the marginal rays XY and VY, the latter of which represents the upper borderline 10.

4

Correspondingly, the lower borderline 10 of the information zone is the ray of the beam emanating from the lower extremity of the object 1 (point of the arrow), which passes through the objective lens 2 as marginal ray on the same side of the axis of the objective lens. This beam emanating from the extremity arrow's point and passing through the objective lens is hatched with lines descending to the right side and is, behind the objective lens, bordered by the marginal rays VZ and XZ, the latter of which is the lower border 10 of the information zone.

Thus, in the illustration of fig. 3 this zone is represented by the triangle VEX behind the objective lens, which is to be seen with a crosswise hatching. In consideration of the two dimensions of the object picked up by the objective lens this zone can be described as the area of overlapping of the beams from the extremities of the object through the objective lens. All entry windows of the optical elements 4 have to be located in this area in order to generate a complete image of the object with the help of the partial luminous flux intercepted by the element under consideration.

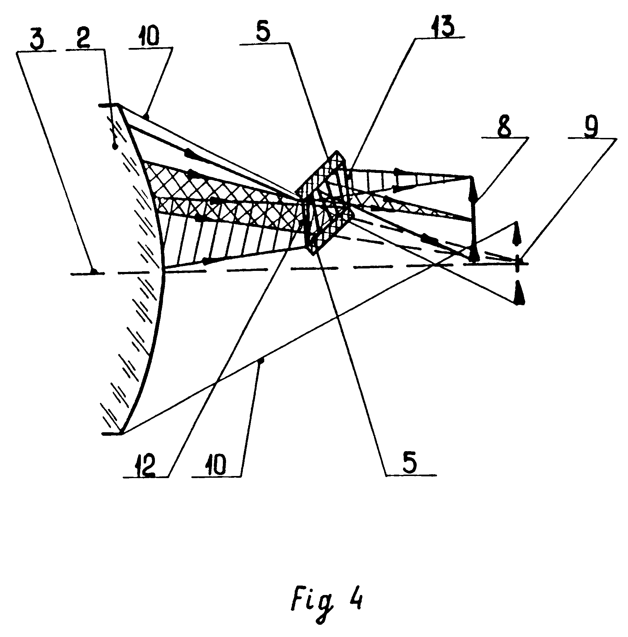

Fig. 4 shows the path of rays in an optical element consisting of two reflective surfaces 5 arranged parallel to each other. In combination with the objective lens 2 a displaced image 8 is generated. The entry window 12 of this optical element is located in the information zone VEX.

With this optical element a gradated illumination of the generated image is observed, because the lower reflective surface, being the first in the path of rays, screens off the exit of the luminous flux out of the exit window 13, this screening-off increasing towards the axis 3 of the objective lens. This effect is illustrated for three points of the image 8 created by this optical element and the pertaining beams, namely the hatched beam converging in the point of the arrow, the beam with crosswise hatching converging in the middle of the arrow and a ray which reaches the tail of the arrow and could not possibly be called a beam of rays. It is to be seen how the aperture angle of the beams decreases and the illumination of the lower extremity - arrow's tail - can be only very weak in the image 8. Still, a complete image of the object is obtained. The image of a larger object would not be complete and, equally, the image would not be complete if the optical element were located in a greater distance from the objective lens 2.

The vignetting effect on the beams passing through the optical element thus causes an uneven illumination of the image, which becomes less, the more the entry window of the optical elements is displaced in the axial direction towards the objective lens and in radial direction towards the axis of the objective lens. It follows that efforts should be made to arrange the optical elements around the axis of the objective lens and contacting this axis, as well as immediately behind the objective lens. This is feasible with optical elements having entry windows in the form of sectors, the points of which lie on the axis of the objective lens.

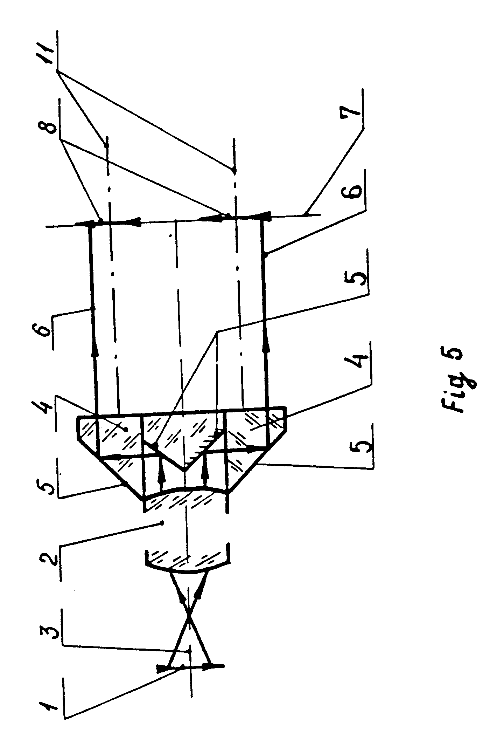

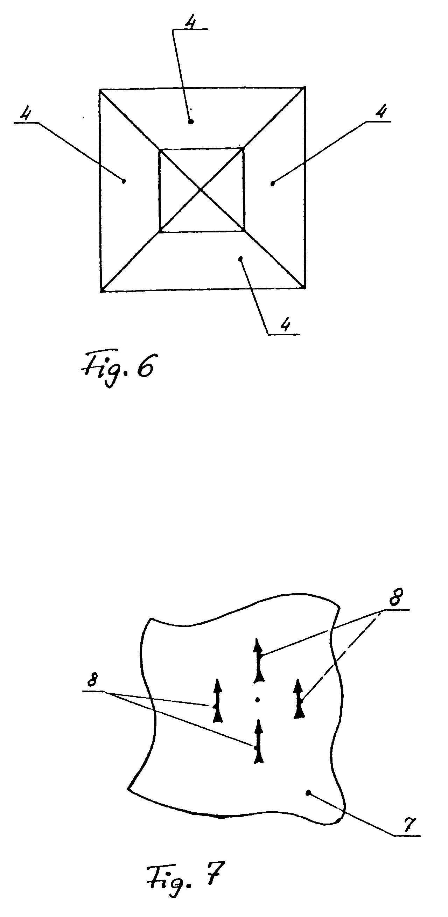

Figs. 5, 6 show an example for a system with four optical elements arranged in this way. Fig. 5 shows an axial section and fig. 6 the front view from the side of the objective lens. The four optical elements are formed by five prisms glued to each other. A first central prism in the form of a pyramid constitutes the first reflective surfaces 5 of all four optical elements with its four prism surfaces having the effect of mirrors and being provided with totally reflecting or partially reflecting coatings. These surfaces deflect the incident luminous flux laterally outwards onto second reflective surfaces 5 which are formed by four identical peripheral prisms in the form of isosceles prisms, in which a total reflection at the inner prism surfaces takes place. This prism arrangement is arranged behind the objective lens 2 with central symmetry relative to the axis 3 of the objective lens. Fig. 7 shows the location of the images 8 generated by this arrangement and lying on the corners of a square in central symmetry.

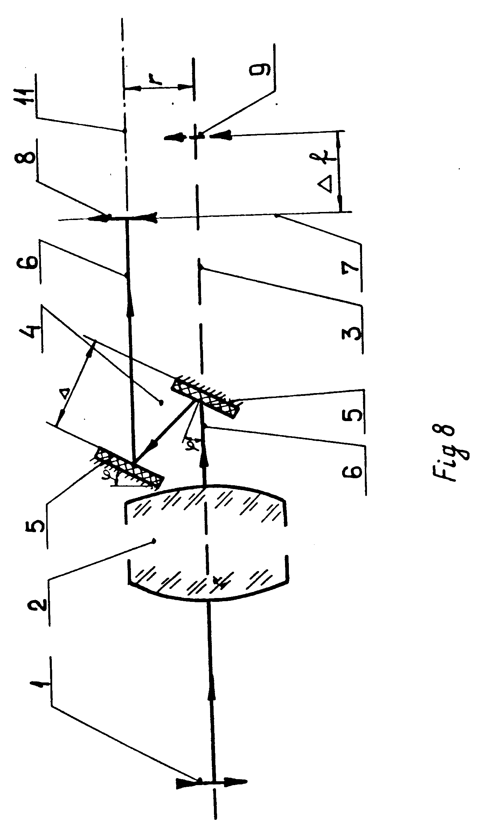

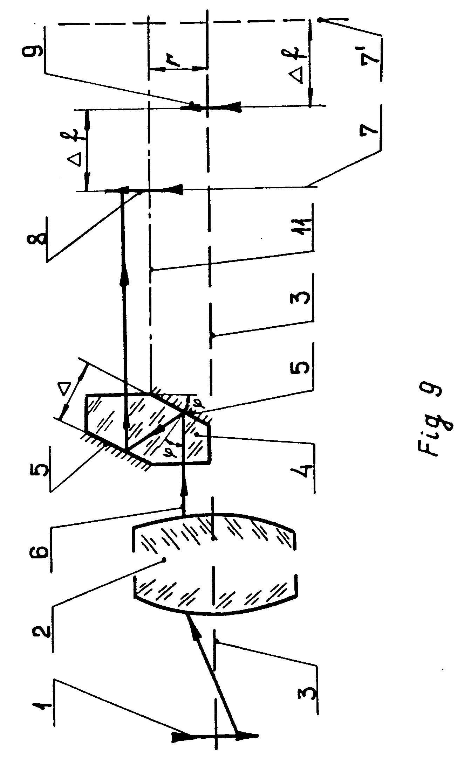

Figs. 8 and 9 show the simplest optical elements of beam-splitting devices with two reflections. The optical element according to fig. 8 consists of two mirrors arranged parallel and inclined at an angle $\phi$. A ray 6 parallel to the axis and its path is also shown. The ray 6 emanating from a point of the object 1 and, after passing the objective lens 2 progressing along the axis 3 reaches the reflective surface 5 at an angle of incidence $\phi$ and is subjected to a lateral displacement of the magnitude r which equals

$$r = 2 \Delta \sin \phi \qquad (1)$$

with $\Delta$ denoting the distance between the reflective surfaces.

The image 9 created by solely the objective lens 2 lies in a certain distance from the objective lens. Inasmuch as the luminous flux experiences only deflections in the optical element and does not pass through a material with a different refraction coefficient, the geometrical length of the path of the ray to the image plane remains the same and the double reflection has the effect that the image plane of the image 8 obtained through the optical element is nearer to the objective lens than the image plane of the image 9 by $\Delta f$ which equals

$\Delta f = 2 \Delta \cos \phi \qquad (2).$

The lateral displacement r of the image 8 created by the optical element relative to the image 9 created without the optical element occurs in the radial plane through the axis 3 of the objective lens in which the inclination angle $\phi$ of the reflective surface 5 lies. If for each of the images 8 the required lateral displacement $r_i$ and the displacement of the image plane, common for all images 8, by the distance $\Delta f$ is given, the parameters as well as the orientation of each optical element required to comply with these conditions can be obtained from the equations

$$\Delta_i = 0,5 \ (r_i{}^2 + \Delta f^2)^{0,5}$$
$$tg \ \phi_i = r_i / \Delta f \qquad\qquad\qquad (3).$$

The application of these equations allows the construction of a beam-splitting device which sets off the generated images 8 in a common image plane, which is displaced axially by $\Delta f$, by lateral displacements, the magnitude and the direction of which can, to a large extent arbitrarily be chosen.

Fig. 9 shows an optical prism element with two parallel reflecting planes 5 and with an entry plane and an exit plane oriented perpendicularly with respect to the axis 3 of the objective lens. This results in a lateral set-off r of the generated image 8 like with the optical element shown in fig. 8 according to the equation (1), however, with respect to the axial displacement of the image plane by $\Delta f$, the optical properties of the material of the prism have to be taken into account. The refraction of the rays at the entry plane and the exit plane of the prism has the effect that the point of convergence of the rays of a beam emanating from one point of the object, i.e. the corresponding image point and thus the image plane lie in a greater distance from the objective lens. When considering the paraxial rays near the axis, an additional axial displacement of the image plane away from the objective lens by the amount $D(n-1)/n$ is to be taken into account, in which D is the total geometrical length of the path of the ray within the prism and n the refraction coefficient of the material of the prism. Thus we obtain

$\Delta f = 2 \Delta \cos \phi - D \ (n-1)/n \qquad (4).$

Certain combinations of the parameters n and $\phi$ can result in the image plane obtained with optical prism elements being farther away from the objective lens than the image plane of the image generated by solely this objective lens. If the location of the image plane, i.e. the value $\Delta f$ and the position of the images 8 in this image plane, i.e. the values $r_i$, are given, it is possible to calculate the parameters $\Delta_i$ and $\phi_i$ of optical prism elements for various values of n complying with the data.

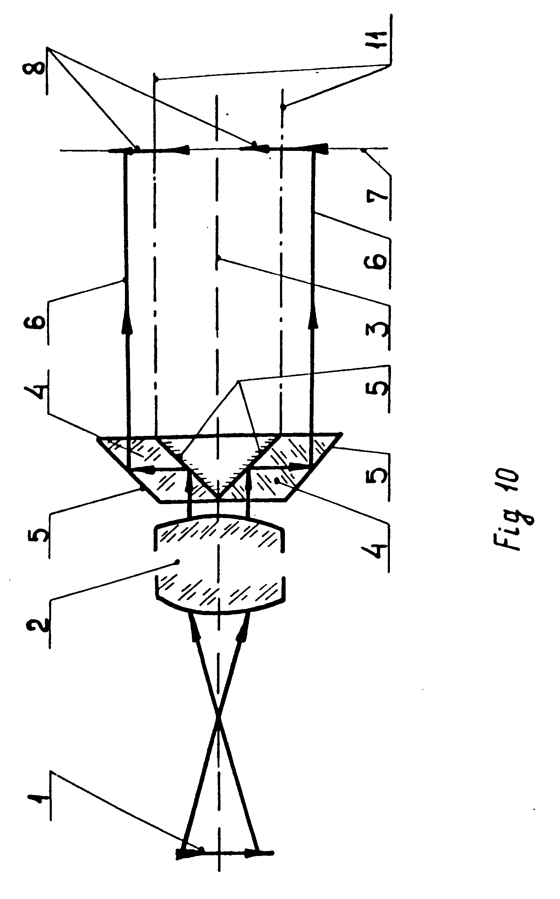

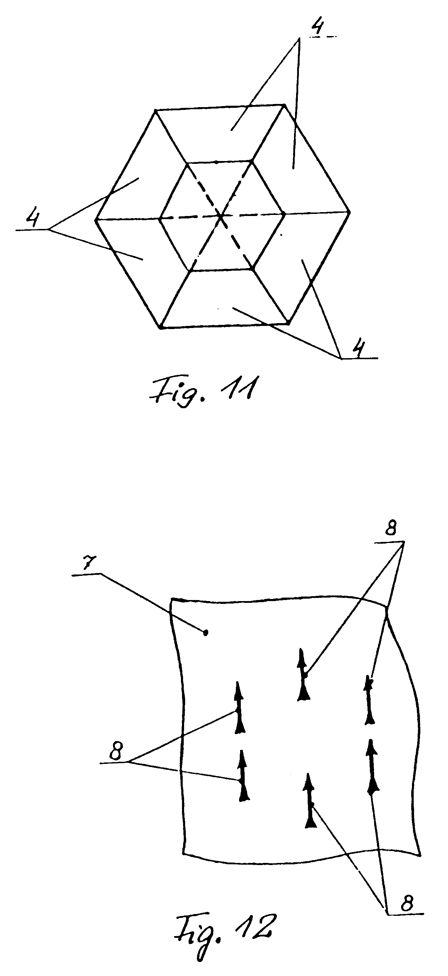

Figs. 10, 11 show a beam-splitting system with prism elements generating six images. The optical elements 4 are constituted by six rhombic prisms in the form of sectors, glued together in central symmetry in the immediate vicinity behind the objective lens 2. The distribution of the images 8 in the image plane 7 on the corners of a regular hexagon is shown in fig. 12.

Referring to fig. 4 it is now to be demonstrated how the illumination of an image generated with the participation of an optical element can diminish towards the axis of the objective lens. This is true if the optical element brings about a lateral displacement of the images away from the axis of the objective lens. This is the case with the optical elements in the systems shown in figs. 5, 6 and 10, 11, with which the images according to figs. 7 and 12 are obtained geometrically identical and increasingly darker towards the axis of the objective lens.

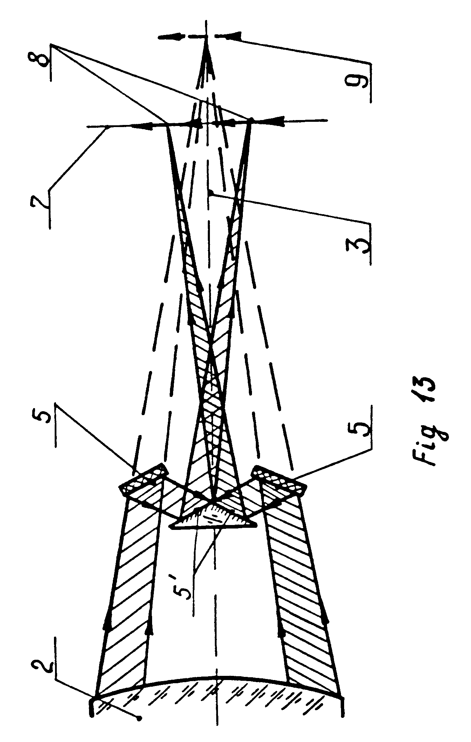

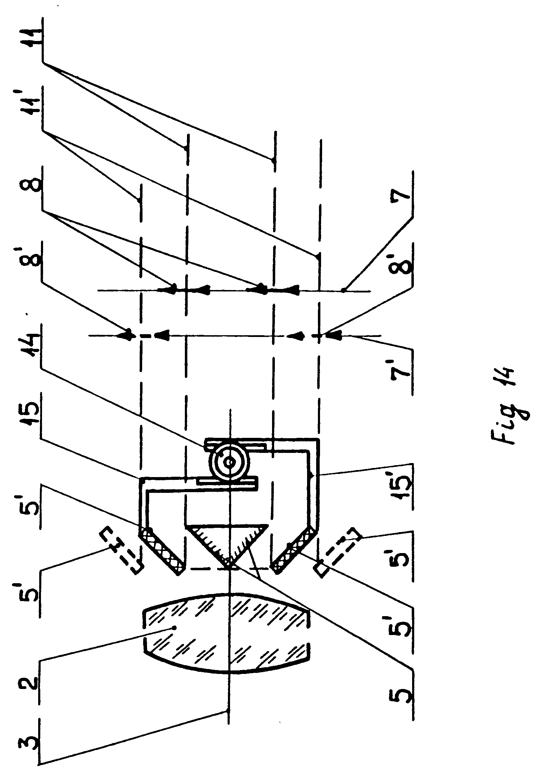

Fig. 13 shows a beam-splitting device with optical elements, the reflective surfaces 5 of which displace the incident luminous fluxes towards the axis 3 of the objective lens, so that the illumination in the images 8 has the opposite tendency: Here the region near the axis is brighter and the brightness diminishes radially outwards.

The unevenness of the distribution of the brightness in the radial direction can, in both forms of its appearance, be corrected. An optical possibility is the arrangement of neutral graded filters, e.g. in front of the image plane, the transmittance of which changes in the radial direction so that the unevenness of the brightness caused by the system is compensated. If the image is processed electronically it is possible to compensate for uneven distributions of brightness by corresponding electronic measures.

Fig. 14 shows a beam-splitting system with an adjustable distance between the generated images. The luminous fluxes reach, after passing the objective lens 2, a first reflective surface 5, which deflects the fluxes radially outwards, and thereafter second reflective surfaces 5', which deflect the fluxes back to the original direction of incidence. The optical axes of the partial fluxes generating the images 8 in the image plane 7 are denoted with the numeral 11.

The second reflective surfaces 5' are connected to racks 15, 15', which interact with a gear 14 at opposite points of its periphery. By rotating this gear, the distance between the second reflective surfaces along the transverse portion of the path of the rays, presently in the radial direction, from the axis of the objective lens can be changed, maintaining the symmetrical situation. A lateral displacement outwards into the position shown in dotted lines will result in a displacement of the optical axes to new positions denoted with the numeral 11', lying farther away from the axis 3 of the objective lens. The images 8' are now obtained with a greater distance between them in an image plane 7', which is nearer to the objective lens.

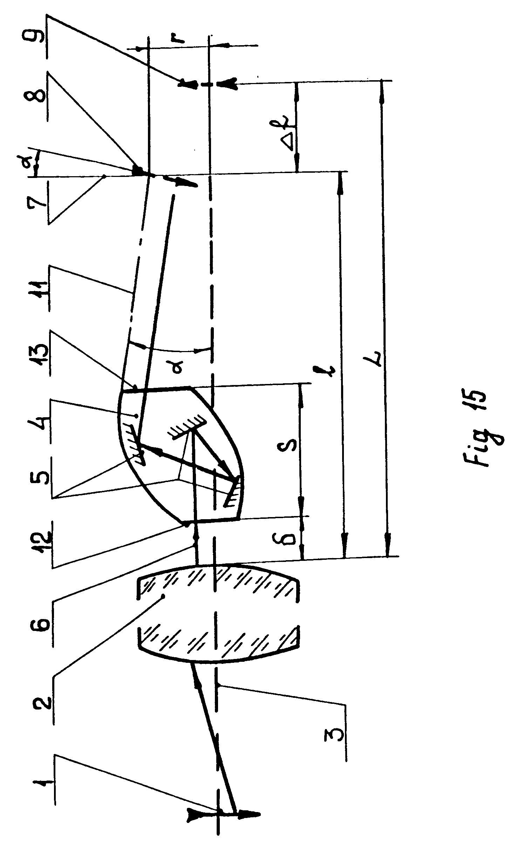

Fig. 15 shows a general system with an optical prism element in which the parameters for the mathematical calculation are indicated. A beam 6 emanating from a point of the object 1 and passing through the objective lens 2 leaves the objective lens in a direction parallel to the axis 3 and reaches, in a distance $\delta$ from the objective lens, the entry window 12 of an optical element 4, in which several reflections take place and the different portions of the path of the ray progress through materials with different optical densities. The ray leaves the exit window 13 of the optical element cornering a small allowable angle $\alpha$ with the axis 3 of the objective lens, so that also the optical axis 11 of the partial luminous flux of the optical elements corners this inclination angle with the axis of the objective lens. The image 8 generated at right angles to the optical axis 11 is set off from the image 9 generated by solely the objective lens in a transverse direction, which is caused by the reflections in the optical element as well as by the refractions of the rays when entering materials of different optical density.

The distance of the image 9 from the objective lens is L. The image 8 generated in conjunction with the optical element lies in a distance 1, which, for paraxial rays, can be calculated

$$1 = [\ L - D + \sum_{i=1}^{N} d_i(n_i-1)/n_i]\ \cos\ \alpha\ +\ S\ +\ \delta\ (1-\cos\ \alpha) \qquad (5)$$

from the formula: with the following parameters:
S - dimension of the optical element in axial direction,
$\delta$ - distance between the objective lens and the entry window of the optical element,
D - geometrical length of the path of the ray within the optical element,
i - consecutive number of the material through which the luminous flux within the optical element proceeds,
$n_i$ - absolute refraction coefficient of the material no. i,
$d_i$ - geometrical length of the path of the ray in the material no. i with this length of path being the same for all rays entering the element in a direction parallel to the axis and passing the border plane between the optically different materials at right angles,
N - number of the optically different materials in the way of the luminous flux.

The image plane 7 shown in fig. 15 in the distance 1 from the objective lens intersects the center of the image 8, which means that at this location the best focus of the image is obtained, whereas the sharpness of the image diminishes towards the borders. This, however, is allowable if the angle is small ( $\alpha < 10°$). The admission of an angle $\alpha$ between the optical axis 11 of the partial luminous fluxes of the optical elements and the axis 3 of the objective lens or, respectively, the direction rectangular to the image plane 7, can be useful to change the location of the image 8 in a transverse direction. It can be seen from fig. 15 that with an axial displacement of the optical element and, thus, a change of the distance $\delta$ between the optical element and the objective lens, the optical axis 11 of the partial luminous flux changes its point of intersection with the image plane 7 and thus, the position of the image 8. At the same time it can be deducted from formula (5) that with such an operation the distance 1 of the image plane practically does not change, which, with the embodiment according to fig. 14 is the case.

It should be noted that also an optical element can be used which generates its image on the axis 3 of the objective lens and displaced in an axial direction by an amount required. With the help of an Abbe prism or a Pehan prism the intercepted luminous flux can, after several reflections, be brought back to the axis of its incidence. In this way an image can be obtained which is not offset laterally, i.e. an image where the axis 3 of the objective lens intersects the image plane 7.

An example for the application of the proposed beam-splitting system is the use in a microscope for conducting biological investigations, especially the determination of the distribution of certain substances in the object of the examination. This substance can be $Ca^{2+}$ or a certain colouring agent. The concentration of a substance at each location of the object is positively determined by the relation of the intensities of the fluorescent radiation in certain narrow spectral ranges. If a beam-splitting device, e.g. according to figs. 5, 9 or 13, is arranged between the last lens of a microscope and an image receiving device, the latter is able to receive a plurality of images. If interference filters with different ranges of transmittance are interposed in the paths of the beams the images will be obtained in different spectral ranges. By comparing the intensity of radiation at the points of the various images corresponding to the same point of the object, the distribution of the relation of the single spectral components of the radiation received from the object can be obtained over the entire object and thus, the distribution of the concentration of the substance under investigation in the object.

**Claims**

1. Optical beam-splitting system for the generation of a plurality of real images (8) of an object (1) in a plane (7), comprising an objective lens (2) and optical elements (4) being arranged behind the objective lens (2) and deflecting the path of rays at planar reflective surfaces (5), characterized in that each optical element intercepts a partial luminous flux within the region (VEX) where the beams emanating from the extremities of the object (1) and passing through the objective lens (2) overlap each other, that each optical element deflects its partial luminous flux by means of at least two reflecting planes (5) sideways and back into the original direction or a direction which is at least near the original direction, with the change ($\Delta f$) of the distance (L; l) of the image plane (9; 7) caused by all optical elements being the same.

2. Beam-splitting system according to claim 1, characterized in that the optical elements (4) divide the total cross section of the luminous flux behind the objective lens (2) into sectors, the points of which lie on the axis (3) of the objective lens and each of which deflects the partial luminous flux of this sector.

3. Beam-splitting system according to claim 1 or 2, characterized in that the distance ($\delta$) between the entry window of each optical element (4) and the objective lens (2) equals zero.

4. Beam-splitting system according to any of the preceding claims, characterized in that the reflective surfaces of the optical elements are mirrors.

5. Beam-splitting system according to claim 4, characterized in that at least one of the mirrors of at least one optical element is of spectrally selective action.

6. Beam-splitting system according to any of claims 1 through 3, characterized in that the optical elements are prisms of transparent material.

7. Beam-splitting system according to claim 6, characterized by optical elements in the form of rhombic prisms (Figs. 10, 11).

8. Beam-splitting system according to claim 6 or 7, characterized by a reflecting coating of the reflecting prism planes.

9. Beam-splitting system according to any of the preceding claims, characterized in that a selectively reflecting coating is applied to at least one of the reflecting planes (5) of at least one optical element (4).

10. Beam-splitting system according to any of the preceding claims, characterized by two optical elements, each of which consists of a first reflecting plane (5) deflecting the partial luminous flux sideways, and a second reflecting plane (5') deflecting the partial luminous flux back into a direction parallel to the direction of incidence, the reflecting planes being symmetrically arranged with respect to the axis (3) of the objective lens, and with the distances between the axis (3) of the objective lens and the second reflecting planes (5') being variable, maintaining the symmetry.

**11.** Beam-splitting system according to claim 10, characterized in that each second reflecting plane (5') is attached to a rack (15, 15') and that the racks interact with a gear (14) at opposite points of its circumference.

Fig 1

EP 0 484 802 A2

Fig 2

Fig 3

Fig 4

Fig 5

Fig. 6

Fig. 7

Fig 8

Fig 9

Fig 10

EP 0 484 802 A2

Fig. 11

Fig. 12

Fig 13

Fig 14

Fig 15

EP 0 484 802 A2